Europäisches Patentamt

European Patent Office

Office européen des brevets

(11) Publication number: **0 408 200 A2**

# EUROPEAN PATENT APPLICATION

(21) Application number: 90306577.9

(51) Int. Cl.⁵: **G06F 9/46**

(22) Date of filing: 15.06.90

(30) Priority: 15.06.89 US 366788

(43) Date of publication of application:
16.01.91 Bulletin 91/03

(84) Designated Contracting States:
AT BE CH DE DK ES FR GB IT LI LU NL SE

(71) Applicant: **INTELLUTION INC**
**315 Norwood Park South**
**Norwood, Massachusetts 02062(US)**

(72) Inventor: **Chisholm, Alpin C.**
**25 Redcoat Lane**
**Plainville, Massachusetts 02762(US)**
Inventor: **Jenney, Edward B.**
**169 Francis Avenue**
**Pawtucket, Rhode Island 02860(US)**

(74) Representative: **Deans, Michael John Percy et al**
**Lloyd Wise, Tregear & CO. Norman House**
**105-109 Strandand**
**London WC2R OAE(GB)**

(54) Using shared resident functions in a computer system.

(57) Application programs in a computer system are able to have shared access to a function needed by each of the application programs by including a single copy of an instruction sequence implementing the function in a terminate and stay resident program (TSR) stored in memory, enabling each application program to invoke the single copy of the function instruction sequence without requiring duplication of the instruction sequence in memory.

FIG.2a

## USING SHARED RESIDENT FUNCTIONS IN A COMPUTER SYSTEM

This invention relates to computer systems that include application programs that need shared access to functions.

In a digital data processing system in which multiple application programs share functions, e.g., input/output functions, database access functions, or alarm functions in a library of functions, it is known to require each application to copy a desired function into random access memory (RAM) when the application needs the function. If multiple applications need a function at any given time, there will be multiple copies of the function in RAM.

In general, the invention features enabling application programs in a computer system to have shared access to a function needed by each of the application programs; a single copy of an instruction sequence implementing the function is included in a terminate and stay resident program (TSR) stored in memory, and a device is provided for enabling each application program to invoke the single copy of the function instruction sequence without requiring duplication of the instruction sequence in memory.

Preferred embodiments include one or more of the following features: The accessing device includes a TSR data structure which contains an identification of the TSR and a corresponding pointer to the TSR. Single copies of instruction sequences for other functions needed by the application programs are also included in the TSR, and the accessing scheme includes a function data structure which contains an identifier for each function in the TSR and a corresponding pointer to the location of the function within the TSR. Additional TSRs are also stored in memory and the additional TSRs contain single copies of instruction sequences implementing additional functions. The TSR data structure includes a linked series of cells, each cell containing an address of one of the TSRs and a pointer to another cell. An interrupt cell at the head end of the linked series of cells contains an interrupt address and a pointer to the next cell in the linked series. Multiple TSRs may be organized in a single executable file loaded in memory. The address of a needed function is determined by offsetting the address of the appropriate TSR found in one of the cells by the pointer to the location of the function within the TSR.

As a result of the invention multiple applications may take advantage of needed functions while minimizing the use of memory space.

Other advantages and features will become apparent from the following description by way of example only of preferred embodiments, with reference to the accompanying drawings, in which:-

Fig. 1 is a block diagram of components of a computer system;

Figs. 2a and 2b are block diagrams of data structures, TSR chain, and function table used by the system ; and

Figs. 3 and 4 are flow diagrams of the general operation of the system.

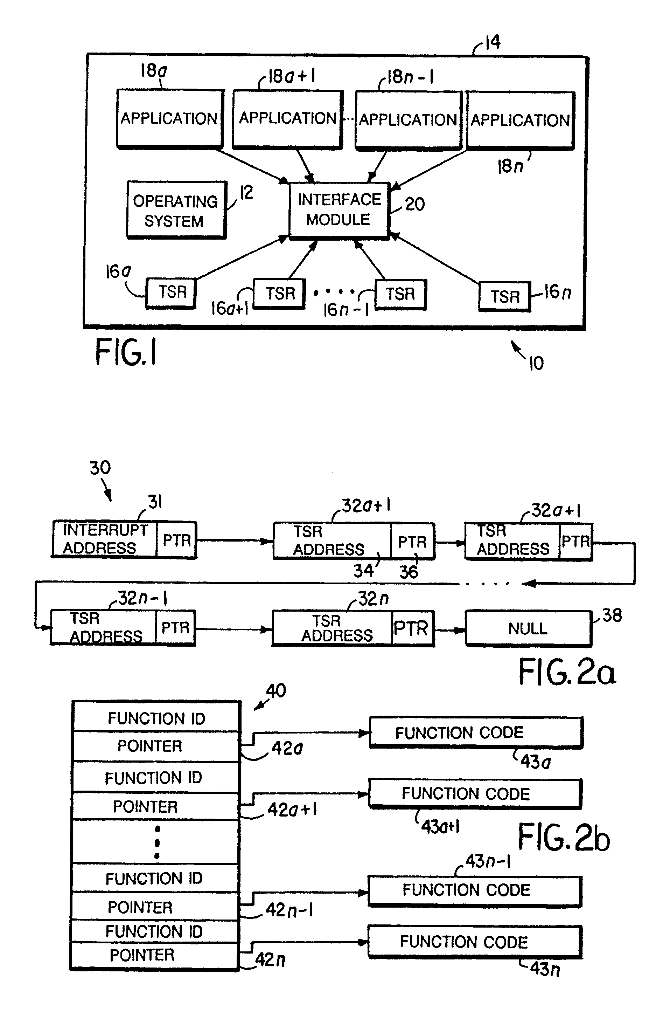

Referring to Fig. 1, a digital data processing system 10 includes an operating system 12 which is stored in and addresses a random access memory (RAM) 14. Also stored in RAM 14 are terminate and stay resident programs (TSRs) 16a-16n and application programs 18a-18n. Each TSR 16 contains a plurality of instruction sequences that provide functions that can be shared by the applications 18. An interface module 20 coordinates requests by applications 18 for functions within TSRs 16.

Referring to Fig. 2a, RAM 14 also Contains a TSR chain 30 created by the interface 20 when loading TSRs 18. The chain 30 includes cells 32a-32n. Each cell 32 includes an address field 34 which contains an address in RAM where a TSR begins and a pointer field 36 which points to the next cell 32 in the chain 30.

Referring to Fig. 2b, the interface 20 also creates a function table 40 for each TSR 16. The table 40 contains cells 42a-42n, one for each function in the TSR. Each cell 42 contains a function id and a pointer to the instruction sequence (function codes 43a-43n) within the TSR 16 that provides the corresponding function.

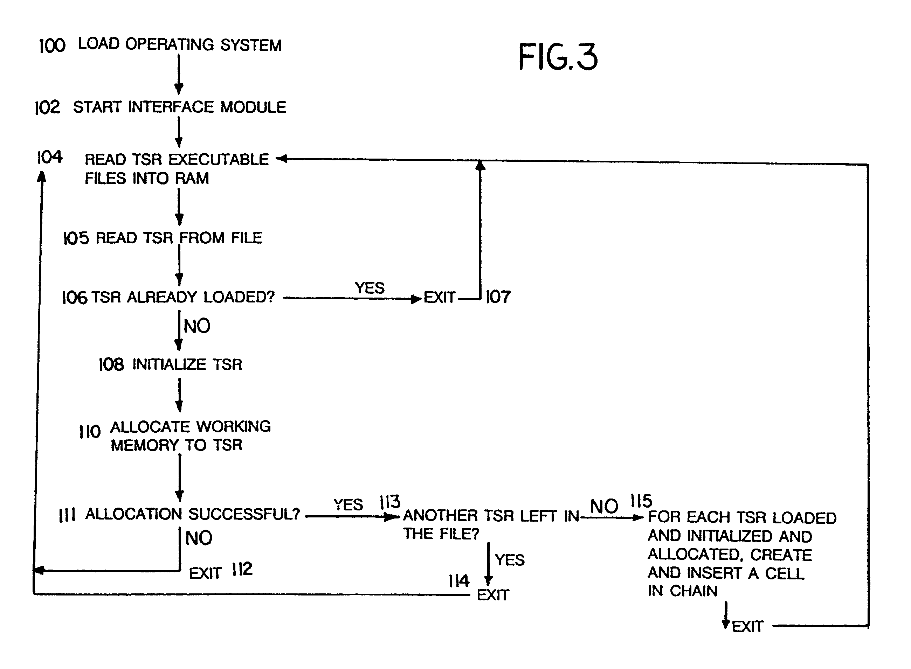

Referring to Fig. 3, the loading of TSRs 16 and creation of data structures shown in 2a and 2b will now be described. At system startup, the operating system 12 is copied into RAM 14 (step 100). A user then starts the interface module 20 (step 102) which loads the TSRs 16 and creates the TSR chain 30. The interface 20 begins by reading a file which may contain multiple TSRs from a secondary storage medium, e.g., a disk, (step 104) into RAM.

Next, the interface 20 reads a TSR 16 from the file (step 105). If the TSR 16 has already been loaded (step 106), i.e., if there is a cell 32 in the chain 30 which contains the address of the same TSR already in RAM, the interface returns to read the next TSR executable file (step 107).

Otherwise (if the TSR 16 has not been loaded) the interface 20 invokes an initialization procedure (step 108). The initialization procedure reads, from the TSR file, a function pointer to the start of the TSR's function table 40 and the table size. The starting points identified by the pointers 42 in function table 40 identify the actual RAM location of a function.

The initialization procedure may also dynamically allocate an area of unused RAM 14 as a working memory for the TSR (step 110). How much of RAM 14 is allocated depends on various system characteristics, e.g., how many sessions are running. If there is enough RAM available to satisfy the request (step 111), the initialization procedure returns a pointer to the allocated area. If there is not enough RAM to fill the request, the initialization procedure displays a message, exits without loading the TSR, and returns to read the next TSR executable file (step 112).

If the TSR is successfully loaded (step 111) and there are additional TSRs in the file to load (step 113), the interface returns to load the next TSR in the file (step 114). Otherwise, (there are no more TSRs in the file) the interface 20 creates and inserts (step 115), for each TSR loaded and initialized, a cell 32 in the TSR chain 30. To do this, the interface 20 loads the RAM address of each TSR into the address field 34 of a new cell 32, sets the pointer field 36 of the new cell 32 to point to the same cell pointed to by the interrupt cell 31, and then sets the interrupt cell 31 pointer to point to the newly inserted cell. In the case of the first TSR cell to be inserted, the interrupt cell 31 points to the newly created cell which points to a null cell 38. Thus, the newly created cell points to the most recently inserted cell or to the null cell 38, and the interrupt cell 31 points to the newly created cell. The advantage of having multiple TSRs in a file is that functions common to multiple TSRs are combined in one file to save space in RAM.

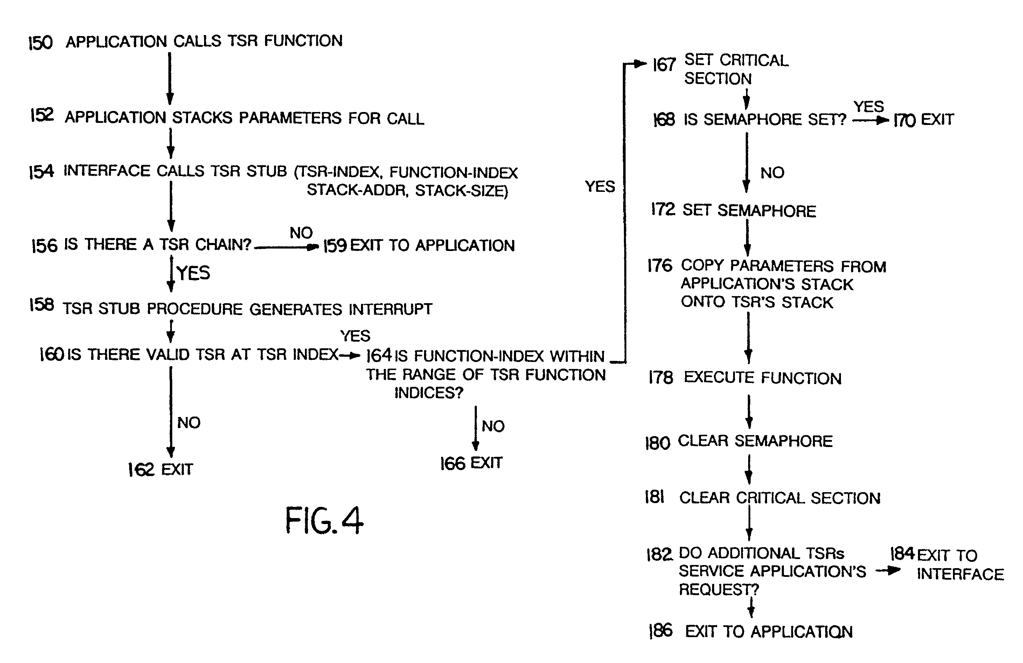

Referring to Fig. 4 and also again to Figs. 2a and 2b, beginning with step 150, when an application 18 calls a function within a TSR, the application stacks the parameters of the call (step 152) on its own stack and stores the beginning address of the parameters on stack (STACK_ADDR) and the amount of space the parameters take up on the stack (STACK_SIZE).

Next, the interface 20 calls (step 154) a TSR stub procedure, and passes to the procedure a TSR id code and a function id for the desired function. If the TSR chain 30 exists (step 156), the TSR stub procedure generates an interrupt (step 158). Otherwise, the interface exits to the application (step 159). After the TSR stub procedure generates the interrupt, the interface 20 "walks" the cells 32 of the TSR chain 30, checking each TSR address 34 to see if it matches the TSR identified by the id code (step 160). If there is no match on the TSR id code, the interface exits to the application (step 162).

Otherwise, it also verifies that the function id provided by the TSR stub procedure is within the range of indices for the function table 40 of the TSR (step 164). If not, the interface exits to the application (step 166). Otherwise, the interface sets a critical section flag (step 167), which disallows scheduling of other tasks and prevents the application from running another task before completing the current function call. (The application is not preempted while a critical section flag is set, although hardware interrupts can still occur.)

Next, the interface checks (step 168) a semaphore field in the TSR, which indicates whether the TSR is in use. (System 10 does not allow cyclic calls to a TSR.) If the semaphore is clear, the interface 20 sets the semaphore (step 172). If, however, the semaphore is set, a cyclic call to the TSR has occurred, and the interface exits to the application (step 170).

Next, the TSR copies the parameters from the application's stack onto the TSR's stack (step 176), and in step 178 executes the function code. The interface 20 then clears the semaphore (step 180) and clears the critical section (step 181) so that other applications can access the TSR.

While, so far, Fig. 4 illustrates a single TSR being called and a single function being executed, an application's call to a TSR could in turn invoke additional TSRs in the TSR chain 30. For example, an application can call a TSR to generate an alarm. In the chain 30, the first TSR that handles alarms may print the alarm to a printer. However, a second TSR in the chain may also handle alarm calls by printing the alarm to a display screen.

In such cases, as described above, the TSR stub procedure "walks" the TSR chain, locates the correct TSR, determines the RAM address of the function code, sets the critical section and semaphore flags, and executes the function code. However, if there are additional TSRs in the chain 30 that will service the request from the application (step 182), control returns to the interface (step 184) for calling an additional TSR and executing a function in it. Otherwise, (i.e., if no additional TSRs will service the request) control returns to the application 18 (step 186).

The appended source code appendix (incorporated herein by reference) embodies the TSR subroutines and interface code, and also includes make files and source code for the shared resident library and an example application and example TSR.

The operating system (and hence the TSRs) is DOS-based (e.g., PC-DOS version 3.3), which is ordinarily a single-user, single-tasking operating system not designed for re-entry applications. The compiler is a Microsoft C-Compiler, version 5.0, and a Microsoft Overlay Linker (version 3.61) is used as well. The assembler is a Microsoft Macro Assembler, version 5.0, and the library manager is a Microsoft Library Manager (version 3.08).

A portion of the disclosure of this patent document contains material which is subject to copyright protection. The copyright owner has no objection to the facsimile reproduction by anyone of the patent document, but otherwise reserves all copyright rights whatsoever.

## Claims

1. A system for enabling application programs in a computer system to have shared access to a function needed by each of the application programs, characterised in comprising a single copy of an instruction sequence implementing the function, said copy being contained in a terminate and stay resident program (TSR) stored in memory, and an accessing device which enables each of said application programs to invoke said single copy of said function instruction sequence without requiring duplication of said instruction sequence in said memory.

2. A system according to Claim 1, further characterised in that said accessing device comprises a TSR data structure which contains an identification of the TSR and a corresponding pointer to the address in storage of the function.

3. A system according to Claim 2, further characterised in comprising single copies of instruction sequences for other functions needed by said application programs, said copies being contained in said TSR, and in that said accessing device comprises a function data structure which contains an identifier for each function in the TSR and a corresponding pointer to the location of said function within said TSR.

4. A system according to Claims 2 or 3 further characterised in comprising additional TSRs stored in said memory and containing single copies of instruction sequences implementing additional functions and in that said TSR data structure contains a linked series of cells, each cell containing an address of one of said TSRs and a pointer to another said cell.

5. A system according to Claim 4, further characterised in comprising an interrupt cell at the head end of said linked series of cells, said interrupt cell containing an interrupt address and a pointer to the next cell in the linked series.

6. A system according to Claims 4 or 5, further characterised in that multiple said TSRs are organised in a single file stored in said memory.

7. A system according to any of Claims 4 to 6, further characterised in that the address of a needed function is operatively determined by offsetting the address of the appropriate TSR found in one of said cells by the pointer to the location of said function within the TSR.

8. A method for enabling application programs in a computer system to have shared access to a function needed by each of the application programs; the method being characterised in comprising the steps of including a single copy of an instruction sequence implementing the function in a terminate and stay resident program (TSR) stored in memory, and providing a device for enabling each of said application programs to invoke said single copy of said function instructions sequence without requiring duplication of said instruction sequence in said memory.

9. A method according to Claim 8, further characterised in including in said device a TSR data structure which contains an identification of the TSR and a corresponding pointer to the address in storage of the TSR.

10. A method according to Claim 9, characterised in comprising the further steps of: including single copies of instruction sequences for other functions needed by said application programs, said copies being included in said TSR, and including in said device a function data structure which contains an identifier for each function in the TSR and a corresponding pointer to the location of said function within said TSR.

11. A method according to Claims 9 or 10, further characterised in comprising storing additional TSRs in said memory, said TSRs containing single copies of instruction sequences implementing additional functions, and in including in said TSR data structure a linked series of cells, each cell containing an address of one of said TSRs and a pointer to another said cell.

12. A method according to Claim 11, further characterised in comprising the step of including an interrupt cell at the head end of said linked series of cells, said interrupt cell containing an interrupt address and a pointer to the next cell in the linked series.

13. A method according to Claims 11 or 12, further characterised in comprising the step of organising multiple said TSRs in a single file stored in said memory.

14. A method according to any of Claims 11, 12 or 13, further characterised in comprising the step of determining the address of a needed function by offsetting the address of the appropriate TSR found in one of said cells by the pointer to the location of said function within the TSR.

FIG.I

FIG.2a

FIG.2b

FIG.3

100 LOAD OPERATING SYSTEM

102 START INTERFACE MODULE

104 READ TSR EXECUTABLE FILES INTO RAM

105 READ TSR FROM FILE

106 TSR ALREADY LOADED? —— YES —→ EXIT — 107

NO

108 INITIALIZE TSR

110 ALLOCATE WORKING MEMORY TO TSR

111 ALLOCATION SUCCESSFUL? —— YES 113 —→ ANOTHER TSR LEFT IN THE FILE? —— NO 115 —→ FOR EACH TSR LOADED AND INITIALIZED AND ALLOCATED, CREATE AND INSERT A CELL IN CHAIN

NO

EXIT 112

114 YES EXIT

EXIT

EP 0 408 200 A2

150 APPLICATION CALLS TSR FUNCTION

152 APPLICATION STACKS PARAMETERS FOR CALL

154 INTERFACE CALLS TSR STUB (TSR-INDEX, FUNCTION-INDEX STACK-ADDR, STACK-SIZE)

156 IS THERE A TSR CHAIN? —NO→ 159 EXIT TO APPLICATION

YES

158 TSR STUB PROCEDURE GENERATES INTERRUPT

YES

160 IS THERE VALID TSR AT TSR INDEX →164 IS FUNCTION-INDEX WITHIN THE RANGE OF TSR FUNCTION INDICES?

NO

162 EXIT

NO

166 EXIT

YES

167 SET CRITICAL SECTION

168 IS SEMAPHORE SET? —YES→ 170 EXIT

NO

172 SET SEMAPHORE

176 COPY PARAMETERS FROM APPLICATION'S STACK ONTO TSR'S STACK

178 EXECUTE FUNCTION

180 CLEAR SEMAPHORE

181 CLEAR CRITICAL SECTION

182 DO ADDITIONAL TSRs SERVICE APPLICATION'S REQUEST? —→ 184 EXIT TO INTERFACE

186 EXIT TO APPLICATION

FIG.4

EP 0 408 200 A2